# EUROPEAN PATENT SPECIFICATION

(11) **EP 3 278 045 B1**
(45) Date of publication and mention of the grant of the patent: **01.05.2024**
(21) Application number: 16732353.4
(22) Date of filing: 01.04.2016
(51) Int. Cl.: F27B 7/20, F27B 7/22

(54) **ROTARY KILN MADE OF A METAL ALLOY**
AUS EINER METALLLEGIERUNG HERGESTELLTER DREHOFEN
FOUR ROTATIF FABRIQUÉ EN UN ALLIAGE MÉTALLIQUE

(30) Priority: 03.04.2015 NL 2014585
(43) Date of publication of application: 07.02.2018
(73) Proprietor: Black Bear Carbon B.V., 6031 NL, Nederweert (NL)
(72) Inventor: VERBERNE, Arnoldus Henricus Adrianus, 6031 NL, Nederweert (NL); JONKMAN, Jan Anne, 6031 NL, Nederweert (NL); TWIGG,Christopher Michael, 6031 NL, Nederweert (NL); LOPES CARDOZO, Martijn Elie, 6031 NL, Nederweert (NL); TER KUILE, Pieter Cornelis Tobias, 6031 NL, Nederweert (NL); TWIGG, Denis, 6031 NL, Nederweert (NL)
(74) Representative: Algemeen Octrooi- en Merkenbureau B.V.
(86) International application number: PCT/NL2016/050226
(87) International publication number: WO 2016/159771

(56) References cited:
- EP-A1- 0 921 206
- DE-A1-102013 010 642

## Description

The present invention relates to a rotary kiln made of a metal alloy and its use.

A rotary kiln made of a metal alloy is known from International application WO2013095145 in the name of the present application. According to this International application a rotary kiln is a cylindrical vessel, inclined slightly to the horizontal, which is rotated about its axis. The material to be processed is fed into the upper end of the cylinder. As the kiln rotates, material gradually moves down towards the lower end, and may undergo a certain amount of stirring and mixing. Such a kiln is used in a method for recycling a scrap rubber, in particular tyres, in which method a scrap rubber is pyrolysed to obtain a char material and wherein the char material obtained is milled to obtain a carbon black powder. The pyrolysis process disclosed therein is carried out in an indirectly heated rotary kiln that is preferably either heated by gas or electrically heated. The rotary kiln can be prepared for continuous pyrolysis of the scrap rubber feedstock operating in counter current flow, wherein the oils (viz. the condensable volatiles) and vapours (viz. non- condensable volatiles) released during the pyrolysis step are removed from the rotary kiln at the same side of the kiln at which the feedstock (scrap rubber) is added. Typical technical parameters for such a rotary kiln are an overall length of 9.0 m, an inner diameter of 0.4 m, a heating zone length of 3.0 m in a nitrogen atmosphere (oxygen free atmosphere) with a rotational speed of 1 - 2 RPM, for example 2-3 RPM, for example 3-4 RPM , for example 4-5 RPM. No details about the material part of the rotary kiln have been disclosed in this International application WO2013095145.

International application WO0053385 relates to a pyrolysis process for reclamation and recovery of desirable constituent materials from vehicle tires shredded into tire pieces, the process comprising the steps of: transferring the tire pieces into a rotary kiln having an infeed end and a discharge end, the rotary kiln having an open interior generally devoid of air and divided a plurality of heating zones; heating each heating zone in the rotary kiln to a distinct operating temperature; transferring the tire pieces through the plurality of heating zones from the infeed end of the rotary kiln to the discharge of the rotary kiln, such that the tire pieces are pyrolysed as the tire pieces traverse the rotary kiln; removing the pyrolysed tire pieces from the rotary kiln; and separating the pyrolysed tire pieces into the desirable constituent materials. No details about the material part of the rotary kiln have been disclosed in this International application WO0053385.

German Offenlegungsschrift DE10 2013 010642 relates to a rotary kiln for the indirect thermal treatment of old tires. The induction thermolysis reactor is made of individual segments, wherein the inner shell consists of austenitic steel and the outer jacket of ferritic steel. The heat resistant components are manufactured from 1.4762 Din / Din NE X10CrAISi25, 1.4862 Din / Din NE X8NiCrSi38-18, 1.4893 Din / Din NE X9CrNiSiNCe 21-1 1 -2 so that operating temperatures up to 1150 ° C are possible.

US 2014/186787 relates to a heat treatment apparatus of performing heat treatment of treatment objects inside a cylindrical body by heating the cylindrical body rotating around an axis wherein the inner cylinder may be formed by using alloys such as Incoloy, i.e. an alloy with very high nickel content, which causes a large thermal expansion.

US 2008/070178 relates to a rotary tube kiln for the production of activated carbon, with several mixing elements arranged in the inner space of the rotary tube for a thorough mixing of a charged material, wherein the rotary tube comprises a transitional area from a smaller inside cross section to a larger inside cross section of the rotary tube, and the mixing elements are formed in the transitional area and/or are arranged in such a manner that the charged material is transported during operation by the mixing elements toward the smaller inside cross section. The rotary tube and mixing elements consist of high-temperature and corrosion-resistant material, in particular steel, i.e. high-alloy steels, such as high-alloy chromium steels and chromium/nickel steels with a chromium portion and/or nickel portion over 10%, especially over 15%, and especially preferably over 20% relative to the alloy, for example ferritic or ferritic-austenitic steel with good corrosion and high-temperature behavior. This document is silent about stabilization of the high-temperature and corrosion-resistant material.

US 2009/175779 relates to a system for activating carbonaceous material comprising a rotary kiln having a shell defining an internal chamber for activating the carbonaceous material to produce activated carbonaceous material, the rotary kiln having an inlet for receiving the carbonaceous material from a dryer unit and an outlet for exiting the activated carbonaceous material from the rotary kiln. High-temperature-resistant steels for producing the rotary kiln include high-alloy steels, i.e. steels containing more than 5% of alloying elements, e.g. high-alloy chromium and chromium/nickel steels with a chromium and/or nickel content of over 10%, in particular over 15%, particularly preferably over 20%, based on the alloy, for example ferritic or ferritic-austenitic steels.

EP 0 921 206 relates to an austenitic stainless steel in applications as superheater tubes. The austenitic stainless steel has the following analysis in % by weight: C:< 0,12, Si:< 1,0, Cr:16-22, Mn:< 2,0, Ni:8-14, Mo:< 1,0, either Ti:> 4·% by weight of C and < 0,8 or Nb: 8 % by weight of C and < 1,0, S:< 0,03, O: < 0,03, N:< 0.05, La:≥ 0,02 and ≤ 0,11,and the remainder Fe and normally occurring impurities.

An object of the present invention is to provide a rotary kiln that can be operated under the reducing gas conditions to be experienced by the kiln in a pyrolysis process of scrap rubber.

Another object of the present invention is to provide a rotary kiln that shows a resistance to a reducing gas atmosphere for up to 8000 hours continuous operation between 500 and 700°C.

The present invention thus relates to a rotary kiln with an internal liner made of a metal alloy, wherein said metal alloy comprises stabilized austenitic stainless steel, wherein said alloy comprises C 0.1 max. %; Mn 2,00 max; P 0,045 max; S 0,03 max; Si 0.75 max; Cr 17-19 %; Ni 9 - 13%, wherein said alloy further comprises N 0,1 max; Co 0,20 max; Nb 8 x content C to 0,1 max; [Nb + Ta] 8 x content C to 0,1 max; Ta 0,10 max; Ti 4 x [C + N] min to 0,70 max, said weight percentages are based on the weight of the alloy, the balance being iron,.

The present inventors found that a metal alloy comprising stabilized austenitic stainless steel is able to meet the afore mentioned objects.

The stabilized austenitic stainless steel alloy comprises C 0.1 max. %; Mn 2,00 max; P 0,045 max; S 0,03 max; Si 0.75 max; Cr 17-19 %; Ni 9 - 13%, said weight percentages are based on the weight of the alloy.

The present alloy further comprises N 0,1 max; Co 0,20 max; Nb 8 x content C to 0,1 max; [Nb + Ta] 8 x content C to 0,1 max; Ta 0,10 max; Ti 4 x [C + N] min to 0,70 max, said weight percentages are based on the weight of the alloy. The balance is iron.

According to a preferred embodiment the alloy is chosen from the group of Alloy 321, Alloy 321H, Alloy 347, Alloy 347H, Alloy 348 and Alloy 348H.

In a specific embodiment of the present rotary kiln the internal parts of the rotary kiln are made of the metal alloy as discussed here. Since only the internal parts of the rotary kiln are exposed to the harsh conditions it is necessary to made them from a material that can withstand those conditions. The rotary kiln is provided with an internal liner made of the metal alloy as discussed above.

In a case that not only the internal parts of the present rotary kiln are exposed to harsh conditions it is preferred to manufacture the tubing that is in communication with one or more product outlets of the present rotary kiln from the preferred metal alloy as well. In an embodiment wherein two rotary kilns placed in series are used, it is preferred to have the connecting tubing parts made of the preferred metal alloy.

The present invention furthermore relates to a process for the pyrolysis of tyres wherein the present rotary kiln as discussed above is used, wherein the kiln is rotated horizontally in a natural gas fired furnace and operated at close to atmospheric conditions.

The present kiln is rotated preferably at 0,5-10 rpm, more preferably 1-3 rpm.

In a specific embodiment of the present invention the present kiln is positioned on an inclination of between 1 and 5°, wherein the temperature of said rotating kiln preferably increases over its length from 500 - 700 °C.

In another embodiment the present rotary kiln is used in a two-stage pyrolysis process, wherein a first pyrolysis stage is carried out in a first rotary kiln and a second pyrolysis stage is carried out in a second rotary kiln, wherein the temperature during the first pyrolysis stage is 500-700 °C and the temperature during the second pyrolysis stage b) is between 550-700 °C, the temperature during the second pyrolysis stage being higher than the temperature during the first pyrolysis stage.

In a preferred embodiment the kiln is operated under reducing gas conditions.

Figure 1 shows a schematic diagram of an indirectly heated rotary kiln with optional cooling zone. The scrap rubber is introduced, together with an inert gas, optionally nitrogen, at the inlet of the rotary kiln. The pyrolysed product flows to the outlet of the rotary kiln and the char material thus produced is withdrawn and further processed.

Figure 2 is a DeLong constitution diagram that relates the chemical composition of the balance between austenite and ferrite formers.

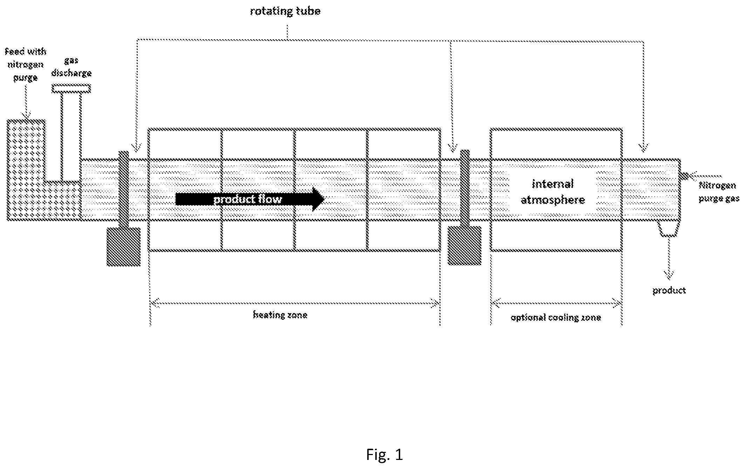

The "internal atmosphere" (see Figure 1) or gas composition was determined during two tests and is shown in Table 2.

Following an extensive investigation a steel chosen from the group of Alloy 321, Alloy 321H, Alloy 347, Alloy 347H, Alloy 348 and Alloy 348H, especially designated Alloy 321 austenitic stainless steel was selected for the metal alloy of the kiln. Whilst there was extensive literature on the use of stainless steels operating under oxidizing conditions there was no direct information of performance under the reducing gas conditions to be experienced by the kiln.

The present inventors found that the kiln manufacturing capability is excellent when using an alloy chosen from the group of Alloy 321, Alloy 321H, Alloy 347, Alloy 347H, Alloy 348 and Alloy 348H, especially Alloy 321. In addition, the present inventors also found that the weldability of an alloy chosen from the group of Alloy 321, Alloy 321H, Alloy 347, Alloy 347H, Alloy 348 and Alloy 348H, especially Alloy 321 is excellent with standard welding precautions as well. With regard to the resistance to the kiln operating stresses including fatigue stresses the present inventors found that an alloy chosen from the group of Alloy 321, Alloy 321H, Alloy 347, Alloy 347H, Alloy 348 and Alloy 348H, especially Alloy 321 fulfils the required mechanical strength requirements for the normal operation of the kiln. Furthermore, the resistance to a reducing gas atmosphere for up to 8000 hours continuous operation between 500 and 700°C provided an acceptable result for an alloy chosen from the group of Alloy 321, Alloy 321H, Alloy 347, Alloy 347H, Alloy 348 and Alloy 348H, especially Alloy 321. On the overall balance of properties an alloy chosen from the group of Alloy 321, Alloy 321H, Alloy 347, Alloy 347H, Alloy 348 and Alloy 348H, especially Alloy 321 is derived as the most effective alloy towards reducing the probability of catastrophic failure (by corrosion and other mechanisms) to a minimum. The next parts of the present description refer especially to Alloy 321 but the alloys chosen from the group of Alloy 321, Alloy 321H, Alloy 347, Alloy 347H, Alloy 348 and Alloy 348H should be understood as including.

The resistance to chromium carbide precipitation and intergranular corrosion is acceptable, i.e. excellent resistance through using a stabilized stainless steel to avoid chromium carbide precipitation. The resistance to carburisation attack can be qualified as an excellent resistance consistent with the low CO/CO₂ ratio of the gaseous atmosphere. Sufficient CO gas at the metal interface is the requirement for carburisation. The high temperature 475 C embrittlement is associated with ferritic stainless steels and not with austenitic stainless steels, including Alloy 321. The Sigma high temperature embrittlement can form from ferrite present with the austenite. Sigma phase is a hard intermetallic compound which is brittle. Extended exposure of ferrite in the temperature range 500-900 C may lead to its formation but more particularly in the temperature range 750-900 C which is above the maximum kiln operating temperature of 700 C. Only a trace of ferrite is probable (1-2 wt. %) in Alloy 321 but the effect of any retained ferrite from which sigma may form has to be balanced against the beneficial effect of such retained ferrite in combating any susceptibility to weld solidification cracking. The presence of small amounts of ferrite in austenitic solidification reduces crack susceptibility. Sulphidation, corrosion and scaling will occur by reaction of kiln sulphide gases with the nickel in the steel. The extent could be largely prevented by using a ferritic stainless steel that has no nickel content. Ferritic stainless steels however are prone to 475C embrittlement and sigma formation, etc. 475C embrittlement is due to the formation of an extremely finely dispersed chromium-rich variation in the ferritic crystal structure. Alloy 321 limits sulphur gas nickel corrosion by having one of the lower nickel contents of the austenitic high temperature stainless steels and a reasonably high chromium content that combat such attack. Regarding hydrogenation one can say that all stainless steels have proved to be resistant to hydrogenisation in most high temperature applications.

In a preferred embodiment of the present invention the Alloy 321 stainless steel is a stabilized austenitic stainless steel 18%Cr -9%Ni similar to Type 304 but with a titanium addition of at least 5 x the carbon plus nitrogen content. The titanium addition prevents chromium carbide and chromium nitride precipitation during welding and also at 427 - 816C whilst in service due to the preferable formation of TiC and TiN rather than carbon reacting with chromium. These stabilisers also improve the elevated temperature properties of the alloy including the creep strength. The steel is supplied to the manufacturer in the annealed condition with a typical Brinell Hardness of 175. It is available in sheet, plate and bar.

The typical chemical analysis (wt. %) is: C 0.08 max. %; Cr 17-19 %; Ni 9 - 12%; Mn 2%; N 0.10%; Si 0.75%; P 0.045%; S and P 0.030%, Titanium 5 x % (Carbon plus Nitrogen) up to 0.70

For fusion welding of Alloy 321 the welding should be preferably carried out using alloy 347 (niobium stabilized) filler metal because direct fusion welding of a titanium filler metal results in some loss of titanium in the arc. Nb preferably captures the carbon as NbC thereby preventing chromium carbide precipitation.

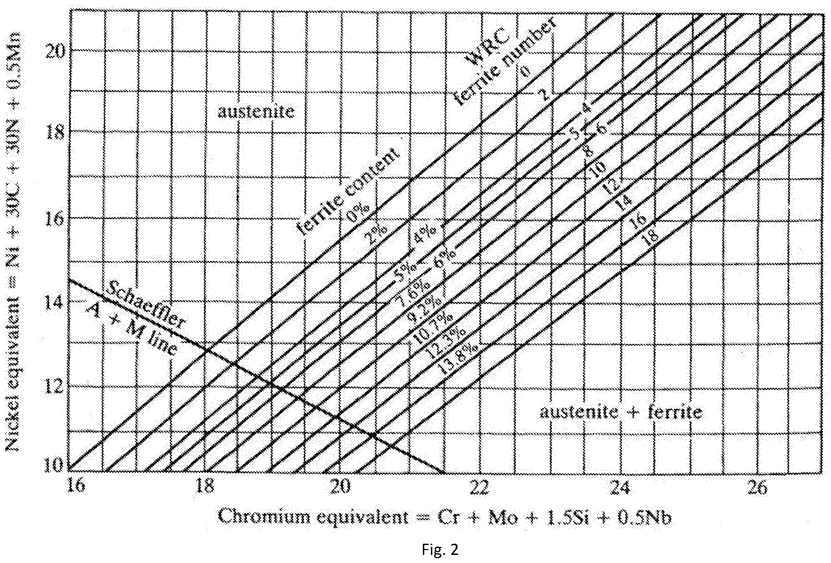

The welding of the kiln tube, more specifically the technical aspects of the chemical composition of the weld metal and the associated possible effects of weld performance in service, are in some embodiments important. The present inventors found that the chemical analysis of the filler metal is a factor in controlling the ferrite content of the austenite. Residual ferrite at a percentage over approx. 3% has several possible detrimental effects. The present inventors found that it is susceptible to significantly converting to sigma phase after long periods at the kiln operating temperature. This results in room temperature embrittlement and can create problems associated with any needed subsequent maintenance involving any plastic deformation. In addition, there would also be some loss of corrosion resistance at operating temperature. Furthermore, some residual ferrite (i.e. < 3%) has the advantage of inhibiting hot weld cracking. On basis of these aspects, a compromise at about 2-3% ferrite in the austenite is preferred. In the enclosed figure 2, i.e. a DeLong diagram that relates the chemical composition of the balance between the austenite and ferrite formers, by plotting from the actual chemical analysis of the weld metal used according to the recommended formulae the ferrite content can be predicted.

The present inventors considered other high temperature stainless steels and stainless alloys categorized as follows: (A) Stainless Steels (Iron greater than 50%, Alloy content less than 50%), Iron plus chromium, Iron plus chromium plus nickel, and (B) Stainless Alloys (Alloy content greater then 50%, Iron less than 50%), Iron plus nickel plus chromium; Iron less than 50% plus nickel plus chromium, Nickel plus chromium plus iron; Nickel based alloys with nickel greater than 50%, Nickel plus chromium; Nickel based alloys with nickel greater than 50%. It was found that many of these alloys operate successfully under oxidizing conditions of service. Under oxidizing conditions oxygen maintains a passive surface film of chromium oxide which reduces the rate of oxidation and attack by sulphide gases. These advantages are not sustained under reducing conditions as the passive oxide film is unstable and lost.

A ferritic chromium steel (Ferrotherm 4742 X10crALSi18, composition: C : 0.12m, Si: 0,7-1.4, Cr: 17-19, Al: 0.7-1.2) with aluminium addition has an outstanding resistance to sulphur gas attack (sulphidation) due to the absence of nickel but it has many other disadvantages associated with being a ferritic stainless steel. Low strength at elevated temperatures; 475C embrittlement between 370-538C; Suffers sigma embrittlement 500-700 C; Poor weldability due to being prone to excessive grain growth in the heat affected zones of fusion weldments. Inadequate resistance to carburization attack.

Another ferritic stainless steel, i.e. Alloy 446 (composition: C: 0.15, Cr: 27, N: 0.25), has many similar problems making them unsuitable for the kiln metal alloy.

A technical disadvantage of Incoloy Alloy 800HT (composition: Ni: 30-35, Cr: 19-23, Fe: 39.5min, C: 0.06 -0.10, Al: 0.25-0.60, Ti: 0.25-0.60) is that the titanium content could sometimes fail to combine with all the carbon making it susceptible to intergranular corrosive gas attack. For example the chemical analysis 0.10% C 0.25% Ti that falls within the element specification range.

The present inventors found that other alloys such as 253MA; 310; 330; 600; 601; 602 were considered unsatisfactory in a reducing atmosphere to sulphur gas attack.

In Table 1 some properties of the alloys as discussed above are displayed. Qualitative comparative requirement properties of the alloys discussed based on an assessment scale of 1-10. Relates to the estimated performance of Alloy 321: Ferritic stainless steels in general and other Austenitic/Stainless Alloys in general. Performance comparison as a kiln metal operating in a reducing atmosphere as per Table 2 for continuous operation up 8000 hours between 500 and 700 C.

Rating 1-4 Poor; 5-8 Intermediate; 9-10 Good.

| **PROPERTY REQUIREMENT** | **ALLOY 321** | **FERRITIC STAINLESS STEELS** | **OTHER AUSTENITIC AND STAINLESS ALLOYS** |
|---|---|---|---|
| General mechanical strength: (Tensile, Fatigue,Creep, Impact | 8 | 5 | 8 |
| Carburization and Intergranular corrosion resistance | 9 | 2 | 9 |
| Sulphidation resistance: Sulphur dioxide and hydrogen sulphide | 8 | 10 | 5 |
| 475 C embrittlement | 10 | 2 | 10 |
| Hydrogenation: Hydrogen embrittlement | 7 | 7 | 7 |
| Weldability problems | 7 | 3 | 7 |
| Chromium carbide precipitation instability | 9 | 1 | 7 |
| Halogen resistance: Chlorine and bromine gases. | 5 | 5 | 5 |
| Relative initial and manufacturing costs | 10 | 8 | 3 |
| TOTALS | 73 | 43 | 61 |

On the basis of the above assessments the present inventors found that a kiln made of Alloy 321 provided the best overall cost effective result considering the potential technical requirements of the kiln.

Other categories of stainless steel that were unsuitable as high temperature materials were as follows: i) Precipitation hardening stainless steels: the steels are solution heat treated followed by ageing at a temperature around 450C. They are thus not classified as high temperature materials because if used above the ageing temperature they would overage and lose significant strength. Hence their unsuitability for use as a kiln material operating in the temperature range 500 to 700C, and ii) Duplex stainless steels: these steels typically have a microstructure of 50% ferrite and 50% austenite. They are not classified as high temperature materials because the ferrite can convert to brittle sigma phase after soaking at temperatures in the range 600-820C. These steels were developed to combat a wet corrosion problem designated stress corrosion cracking and iii) Martensitic stainless steels: these steels are typically quenched and then tempered in the range 200-650C. Exceeding the tempering temperature would result in a drastic loss in strength. Hence their unsuitability for high temperature operations.

The gas composition (see Table 2 below) was determined during two tests from two different pyrolysis trials. Although not analysed, traces of chlorine (CI) and bromine (Br) will be present in the gas. This is known from the composition of the feedstock and from the analysis of the condensable oil fraction.

**Table 2: gas composition from pyrolysis trials**

| Component | Measurement 1 | Measurement 2 |
|---|---|---|
| Hydrogen (H₂) | 27,14 mol % | 23,98 mol % |
| Methane | 41,14 mol % | 36,54 mol % |
| Ethane | 4,02 mol % | 7,15 mol % |
| Ethene | 12,56 mol % | 9,80 mol % |
| Propane | 0,13 mol % | 1,89 mol % |
| Propene | 2,73 mol % | 7,67 mol % |
| i-butane | 0,03 mol % | 0,72 mol % |
| n-butane | 0,06 mol % | 0,64 mol % |
| i-pentane | 0,12 mol % | 0,03 mol % |
| n-pentane | 0,03 mol % | 1,21 mol % |
| i-hexane | 0,03 mol % | 0,21 mol % |
| n-hexane | 0,00 mol % | 0,30 mol % |
| i-heptane | 0,01 mol % | 0,12 mol % |
| n-heptane | 0,00 mol % | 0,02 mol % |
| octane | 0,00 mol % | 0,01 mol % |
| Benzene | 2,88 mol % | 1,76 mol % |
| Toluene | 1,31 mol % | 1,86 mol % |
| Xylene | 0,23 mol % | 1,26 mol % |
| CO | 3,71 mol % | 1,03 mol % |
| CO₂ | 2,42 mol % | 1,48 mol % |
| Nitrogen | 1,20 mol % | 1,20 mol % |
| Oxygen | 0,00 mol % | 0,00 mol % |
| H₂S | 0,023 mol % | 0,021 mol % |
| Mercaptane | 0,003 mol % | 0,003 mol % |
| Other >C8 | 0,22 mol % | 1,10 mol % |
| Total | 100,00 mol % | 100,00 mol % |
| | | |

| Sulphur Compounds | | |
|---|---|---|
| H₂S | 232 ppm | 212 ppm |
| Mercaptane | 26 ppm | 30 ppm |

## Claims

1. Rotary kiln provided with an internal liner made of a metal alloy, wherein said metal alloy comprises stabilized austenitic stainless steel, wherein said alloy comprises C 0.1 max. %; Mn 2,00 max; P 0,045 max; S 0,03 max; Si 0.75 max; Cr 17-19 %; Ni 9 - 13%, wherein said alloy further comprises N 0,1 max; Co 0,20 max; Nb 8 x content C to 0,1 max; [Nb + Ta] 8 x content C to 0,1 max; Ta 0,10 max; Ti 4 x [C + N] min to 0,70 max, said weight percentages are based on the weight of the alloy, the balance being iron.

2. Rotary kiln according to claim 1, wherein said alloy is chosen from the group of Alloy 321, Alloy 321H, Alloy 347, Alloy 347H, Alloy 348 and Alloy 348H.

3. Rotary kiln according to claim 2, wherein said alloy is Alloy 321.

4. Rotary kiln according to any one of claims 1-3, wherein tubing in communication with one or more product outlets of said rotary kiln are made of said metal alloy.

5. Rotary kiln according to any one of claims 1-4, provided with one or more welds, wherein the chemical composition of the weld metal comprises about 2-3% ferrite in the austenite.

6. Process for the pyrolysis of tyres using a rotary kiln according to any one of claims 1-5.

7. Process according to claim 6, wherein said kiln is rotated horizontally in a natural gas fired furnace and operated at close to atmospheric conditions.

8. Process according to any one of claims 6-7, wherein said kiln is rotated at 0,5-10 rpm, preferably 1-3 rpm.

9. Process according to any one of claims 6-8, wherein said kiln is positioned on an inclination of between 1 and 5°.

10. Process according to any one of claims 6-9, wherein the internal temperature of said rotating kiln increases over its length from 500 - 700 °C.

11. Process according to any one of claims 6-10, wherein said pyrolysis of tires comprises at least a two-stage pyrolysis process, wherein a first pyrolysis stage is carried out in a first rotary kiln and a second pyrolysis stage is carried out in a second rotary kiln, wherein the temperature during the first pyrolysis stage is 500-700 °C and the temperature during the second pyrolysis stage b) is between 550-700 °C, the temperature during the second pyrolysis stage being higher than the temperature during the first pyrolysis stage.

12. Process according to any one of claims 6-11, wherein said kiln is operated under reducing gas conditions.

## Patentansprüche

1. Drehrohrofen, ausgestattet mit einer Innenauskleidung aus einer Metalllegierung, wobei die Metalllegierung stabilisierten austenitischen rostfreien Stahl umfasst, wobei die Legierung C 0,1 max. %, Mn 2,00 max, P 0,045 max, S 0,03 max, Si max. 0,75, Cr 17-19 %, Ni 9-13 % umfasst, wobei die Legierung außerdem N 0,1 max, Co 0,20 max, Nb 8 x Inhalt C bis 0,1 max; [Nb + Ta] 8 x Gehalt C bis 0,1 max; Ta 0,10 max; Ti 4 x [C + N] min. bis 0,70 max umfasst, wobei diese Gewichtsprozente beziehen sich auf das Gewicht der Legierung, der Rest ist Eisen.

2. Drehrohrofen nach Anspruch 1, wobei die Legierung aus der Gruppe Alloy 321, Alloy 321H, Alloy 347, Alloy 347H, Alloy 348 und Alloy 348H ausgewählt ist.

3. Drehrohrofen nach Anspruch 2, wobei die Legierung Alloy 321 ist.

4. Drehrohrofen nach einem der Ansprüche 1 bis 3, wobei die Rohre, die mit einem oder mehreren Produktauslässen des Drehrohrofens in Verbindung stehen, aus der Metalllegierung bestehen.

5. Drehrohrofen nach einem der Ansprüche 1-4, versehen mit einer oder mehreren Schweißverbindungen, wobei die chemische Zusammensetzung des Schweißmetalls etwa 2-3 % Ferrit im Austenit umfasst.

6. Verfahren zur Pyrolyse von Reifen unter Verwendung eines Drehrohrofens nach einem der Ansprüche 1-5.

7. Verfahren nach Anspruch 6, wobei der Ofen horizontal in einem erdgasbefeuerten Ofen gedreht wird und bei nahezu atmosphärischen Bedingungen betrieben wird.

8. Verfahren nach einem der Ansprüche 6-7, wobei der Ofen mit 0,5-10 U/min, vorzugsweise 1-3 U/min, gedreht wird.

9. Verfahren nach einem der Ansprüche 6-8, wobei der Ofen in einer Neigung zwischen 1 und 5° positioniert ist.

10. Verfahren nach einem der Ansprüche 6-9, wobei die Innentemperatur des Drehrohrofens über seine Länge von 500-700 °C ansteigt.

11. Verfahren nach einem der Ansprüche 6-10, wobei die Pyrolyse von Reifen mindestens einen zweistufigen Pyrolyseprozess umfasst, wobei eine erste Pyrolysestufe in einem ersten Drehrohrofen durchgeführt wird und eine zweite Pyrolysestufe in einem zweiten Drehrohrofen durchgeführt wird, wobei die Temperatur während der ersten Pyrolysestufe 500-700 °C beträgt und die Temperatur während der zweiten Pyrolysestufe b) zwischen 550-700 °C liegt, wobei die Temperatur während der zweiten Pyrolysestufe höher ist als die Temperatur während die erste Pyrolysestufe.

12. Verfahren nach einem der Ansprüche 6-11, wobei der Ofen unter reduzierenden Gasbedingungen betrieben wird.

## Revendications

1. Four rotatif pourvu d'un revêtement interne en alliage métallique, dans lequel ledit alliage métallique comprend de l'acier inoxydable austénitique stabilisé, dans lequel ledit alliage comprend C 0,1 max. % ; Mn 2,00 maximum ; P 0,045 maximum ; S 0,03 maximum ; Si 0,75 maximum ; Cr 17-19 % ; Ni 9 - 13 %, ledit alliage comprenant en outre N 0,1 max ; Co 0,20 maximum ; Nb 8 x contenu C à 0,1 max ; [Nb + Ta] 8 x contenu C à 0,1 max ; Ta 0,10 maximum ; Ti 4 x [C + N] min à 0,70 max, lesdits pourcentages pondéraux sont basés sur le poids de l'alliage, le reste étant du fer.

2. Four rotatif selon la revendication 1, dans lequel ledit alliage est choisi dans le groupe de l'Alliage 321, de l'Alliage 321H, de l'Alliage 347, de l'Alliage 347H, de l'Alliage 348 et de l'Alliage 348H.

3. Four rotatif selon la revendication 2, dans lequel ledit alliage est l'Alliage 321.

4. Four rotatif selon l'une quelconque des revendications 1 à 3, dans lequel les tubes en communication avec une ou plusieurs sorties de produit dudit four rotatif sont constitués dudit alliage métallique.

5. Four rotatif selon l'une quelconque des revendications 1 à 4, pourvu d'une ou plusieurs soudures, dans lequel la composition chimique du métal fondu comprend environ 2 à 3 % de ferrite dans l'austénite.

6. Procédé de pyrolyse de pneus utilisant un four rotatif selon l'une quelconque des revendications 1 à 5.

7. Procédé selon la revendication 6, dans lequel ledit four tourne horizontalement dans un four alimenté au gaz naturel et fonctionne dans des conditions proches de la pression atmosphérique.

8. Procédé selon l'une quelconque des revendications 6 à 7, dans lequel ledit four tourne à une vitesse à 0,5-10 tr/min, de préférence à 1-3 tr/min.

9. Procédé selon l'une quelconque des revendications 6 à 8, dans lequel ledit four est positionné sur une inclinaison comprise entre 1 et 5°.

10. Procédé selon l'une quelconque des revendications 6 à 9, dans lequel la température interne dudit four rotatif augmente sur sa longueur de 500 à 700°C.

11. Procédé selon l'une quelconque des revendications 6 à 10, dans lequel ladite pyrolyse des pneus comprend au moins un procédé de pyrolyse en deux étapes, dans lequel une première étape de pyrolyse est réalisée dans un premier four rotatif et une seconde étape de pyrolyse est réalisée dans un deuxième four rotatif, dans lequel la température pendant la première étape de pyrolyse est de 500 à 700 °C et la température pendant la deuxième étape de pyrolyse b) est comprise entre 550 et 700 °C, la température pendant la deuxième étape de pyrolyse étant supérieure à la température pendant la première étape de pyrolyse.

12. Procédé selon l'une quelconque des revendications 6 à 11, dans lequel ledit four fonctionne dans des conditions de gaz réducteur.
